Eur~päisches Patentamt

(19) European Patent Office

Office européen des brevets

(11) Publication number: **0 398 643**
**A2**

# (12) EUROPEAN PATENT APPLICATION

(21) Application number: **90305216.5**

(22) Date of filing: **15.05.90**

(51) Int. Cl.5: **G06F 15/40**

(30) Priority: **15.05.89 US 352571**

(43) Date of publication of application:
**22.11.90 Bulletin 90/47**

(84) Designated Contracting States:
**DE FR GB**

(71) Applicant: **International Business Machines
Corporation
Old Orchard Road
Armonk, N.Y. 10504(US)**

(72) Inventor: **Fabbio, Robert, Anthony
8406 Saber Creek Trail
Austin TX 78759(US)**

(74) Representative: **Harris, Ian Richard
IBM United Kingdom Limited Intellectual
Property Department Hursley Park
Winchester, Hants. SO21 2JN(GB)**

(54) **An open system management architecture for data processing system.**

㊷ The system and method of this invention provides a system management facility which utilises an object oriented database to represent data across configurable domains. The utility of the system management facility of this invention is provided by its layered structure in combination with the object oriented paradigm. All of the system management data is viewed as objects, executable methods are written which are specific to the objects, high level commands invoke the methods, and a user interface invokes the high level commands. These layers, the user interface, the high levels commands, the methods, and the objects are loosely coupled to each other to allow each layer to be open and extendable to users. The use of an object oriented database with a layered architecture provides an integrated system management facility across separate and distinct configurable domains.

EP 0 398 643 A2

# AN OPEN SYSTEM MANAGEMENT ARCHITECTURE FOR DATA PROCESSING SYSTEMS

This invention relates to the system management of a data processing system, and more particularly to the use of an object oriented database in an open system management architecture.

Object-oriented database systems allow the semantics of a given environment to be modelled as a set of objects and relationships among them. Moreover, in complex application environments, objects and their relationships usually show very complex internal structures and comprise larger numbers of properties. With today's database systems, which are generally based upon a classical data model (hierarchical, network, or relational), they tend to be tailored to represent rather simple entities, thus resulting in large semantic gaps when dealing with more complex entities. In part this is true because one conceptual entity must be represented by a number of database objects (for example, records, tuples and so on). An object-oriented database system differs in that it offers a data model that allows the user to represent one conceptual real world entity by exactly one object or object class. This implies that an object-oriented model allows entities to be composed of subentities that are entities themselves, including recursive definition. There are several levels of object orientation:

o Structurally object-oriented: Allows one to define data structures to represent entities of any complexity.

o Operationally object-oriented: Includes generic operators to deal with complex objects in their entirety.

o Behaviourally object-oriented: Borrows types from the object-oriented programming paradigm, a data model that incorporates features to define object descriptor types of any complexity together with a set of specific operators (abstract data types).

In summary, an object-oriented database paradigm offers increased modelling power by providing the ability to handle semantically meaningful objects rather than normalised tuples or single records. Such an approach greatly reduces the semantic gap between the real world and the database representation, while at the same time offering a more precise semantic definition of our real world.

The term system management refers to the facilities or tools used to manage the configurable domains that a user is exposed to in a data processing system environment. A domain may be those devices, users, distributed file system, subsystems. and networks in a system; where the system extends beyond a single machine. The system management facilities for each of the configurable domains may include the means to configure the system components when components are added or deleted from a system, means to configure a data processing system within a network of other data processing systems, and/or the means to diagnose failures in the system components or the system configuration, etc. Traditionally, system management is treated as an ancillary element of an operating system environment; made up of an assortment of disjoint tools which collectively offer the administrator/user the ability to manage and monitor various aspects of the system.

There exist a number of basic problems associated with the existing facilities: (1) most of the tools (i.e. devices, minidisks, ndtable, snaconfig and so on) are large monolithic programs which are difficult to maintain; they are aware of the user interface, the data semantics, the rules and the database representation and mechanisms; (2) the user interfaces across the different tools are inconsistent and generally not geared to represent end-user tasks; (3) the underlying data representation varies greatly from ASCII files to databases; and (4) the current tools and data representation are not rich enough to support the increasingly complex environments which need to be supported and represented.

Due in part to the first problem listed above, the existing facilities only understand how to interface with the particular domain for which the program was written. To that end, only the semantics of what is required to perform the administration of such configurable domain is known and provided by the application. Therefore, it is difficult for a user of a system to make changes or extensions to these facilities since the functions provided are representative of the source code. Thus, to make changes or extensions, the source code would have to be changed. Moreover, the larger problem is that the application has the knowledge of the domain and its semantics in the software instead of the data.

Each facility, i.e. program, for each configurable domain is different. Not only does this facility provide a user interface to the domain, but it also understands the semantics of the data, the representation of the data, and where the configuration information is stored. Therefore, for each facility, the user is confronted with a different user interface, and a different representation of the data depending upon which configurable domain the user is currently dealing with. Furthermore, to compound the problems, generally the user interfaces are designed toward the operating system environment of the data processing system instead of towards the task that is to be achieved by the end user.

Consequently, for a user to take advantage of all of the system management facilities, a user is required to work with a variety of different interfaces and procedures. These system facilities do not provide

2

consistency among themselves, do not enhance usability, and are not easily augmented or changed.

Therefore according to the present invention there is provided a system for providing system management to a user of a data processing system, the system comprising:

means for representing data of a plurality of configurable domains in an object oriented database within the data processing system; and

means for performing tasks on the data of the plurality of configurable domains, which means comprises a plurality of layers, wherein the layers are independently extendable, by a user, for each of the plurality of configurable domains.

The present invention therefore allows a cohesive, and consistent technique for managing and monitoring a system to be provided.

The knowledge of each configurable domain is moved into the data by using an object oriented database; thus providing a set of facilities extendable in the field.

The invention enables the usability of the operating environment to be increased by creating an interface that represents the tasks to be performed by a user instead of being solely dependent upon the specific terminology of the operating system environment. It enables the tedious and complicated tasks of managing and monitoring systems to be simplified, where a system may vary from a single machine to a network of machines in a heterogeneous environment.

Thus, in a preferred form of the invention a first one of the loosely coupled structural layers is a user interface, independent from a plurality of functions operating on the data represented in the object oriented database, the user interface receiving parameters from a user for specifying a user system management task to be performed on the objects.

The first layer comprises means for invoking a second layer; the second layer comprising high level command means for performing at least one general operation related to the user system management task but independent of a relationship of the objects. The second layer comprises means for invoking a third layer; the third layer comprising means for performing at least one specific operation on at least one of the objects in response to the user system management task, independently of the object location.

The configurable domains can comprise data for logical devices and real devices.

According to a preferred feature of the invention the system further comprises means for extending the data of at least one of the configurable domains by adding objects to the object oriented database. The system may further comprise means for adding to the means for performing at least one specific operation on at least one of the objects in response to the user system management task. Also, the user high level command means may be changeable by the user for customising and/or adding to the user system management tasks to be performed. The system can further comprise means for making changes to the user interface means.

Thus, a system management technique can be provided which is open and extendable for the management of other objects and related end-user tasks.

In accordance with another aspect of the invention there is provided a method for managing a plurality of system components of a data processing system, the method comprising: representing data of the system components across a plurality of configurable domains in a plurality of objects of an object oriented database; managing the objects consistently throughout the configurable domains by manipulating the objects through a structurally layered facility; and independently extending each of the layers for managing an additional system component.

Preferably the layered environment spans from the task-based user interface to the low level functions of an operating system across all of the configurable domains of a system. The task-based user interface is geared toward the end-user and not the operating environment. The system and its configurable domains are described in a uniform and robust fashion by using an object-oriented paradigm. Since, the techniques used are extendable, the end user can add to their system management environment in any of the different layers of this invention.

The set of configurable domains encapsulated by the architecture are, for example: (1) Devices (disks, printers, terminals and so on); (2) Filesystems/Logical Volumes; (3) Network Nodes; (4) Users and Groups; (5) Queues; (6) Subsystems; and (7) Error Reporting and Problem Management, etc.

The System Management Architecture is based on two concepts. First, the architecture is highly open and extendable. By being open, a user can readily insert and remove the various aspects of the system management product. Second, the architecture uses an object paradigm for representing the description of the system, independent of its network context.

To provide extendibility, a number of distinct architectural layers are created. These layers are:

o User interface

o High-level commands

3

EP 0 398 643 A2

o Methods
o Low-level commands ᐟ calling interfaces
o System Management Services (provided by the Object Data Manager, kernel and so on)

The user interface layer is completely separate from the functions, tasks, and commands that provide the user tasks. To that end, the user is free to provide any user interface desired to represent the different tasks. The high-level commands layer, also referred to as the task layer, is executable entities which provide high level functions. A user is able to add and remove any of the high level commands which allows the user to customise the functions of the tasks which the user may need to utilise. Consequently, a user can add to or delete from the user interface to reflect the new or deleted tasks.

The methods layer views all of the entities in the system as objects. Given that there are objects, the methods define operations and actions that are to be performed on each object. As an example, in the area of devices, all of the devices, including real devices and logical devices, are viewed as objects. Methods are used to define and undefine, configure and unconfigure, start and stop, each of the objects within the system environment. The objects are executable entities which perform particular operations that apply to the particular objects under consideration. For example, if a user wants to start an object of type printer, the method to start the printer is invoked. The methods embody low level functions necessary to perform the operations against the object.

Since all of the layers of the system of this invention are open and extendable, a user can easily add methods, objects, and corresponding changes to a user interface to manage system components which were not originally provided for, such as by the manufacturer of the system management product. For example, if a user wanted to include a printer into the system which was not originally provided for, a user could add to the user interface the configuration of the printer, the user could add tasks that would add, delete, change, and show the printer, the user can then write the methods that apply operations to the printer object by utilising the next layer of this invention, the low level commands.

The system management services include the kernel of the operating system, system libraries, system calls, and the object data manager.

The system and method of this invention enables a single data representation across all of the configurable domains to be provided. The object oriented representation, i.e. data structure, provides a uniform and consistent representation of all of the data in all of the configurable domains. A configurable domain represents its data through the object data manager. The object data manager sends to physical storage an internal representation such that the configurable domain can access and retrieve the data appropriately. All configurable domains are reading and writing through the same interface.

An embodiment of the invention will be described below with reference to the accompanying drawings wherein,

fig. 1A shows a block diagram of the layers of the system management architecture of the embodiment which provide an open and extendable facility,

fig. 1B shows the system management architecture of this embodiment across configurable domains,

fig. 2 shows how the layers are loosely coupled to each other in performing a specific task on an object class,

fig. 3A is a flow diagram showing the flow of operation from the user interface layer to the high level command layer,

fig. 3B is a flow diagram showing the flow of operation in the high level command layer,

fig. 4A is a flow diagram of the code that is executed when the object data manager invokes a method,

fig. 4B is a continuation of the flow diagram of Fig. 4A,

fig. 4C is a continuation of the flow diagram of Fig. 4A,

fig. 5A illustrates a user object class linked to other object classes in the object oriented database for the configurable domain users,

fig. 5B illustrates the flow through the loosely coupled layers when using the system management facility with the configurable domain for user management and the user object class as shown in Fig. 9A,

fig. 6 illustrates an object class linked to other object classes in the object oriented database for the configurable domain involving devices,

fig. 7 shows the structure of a method,

fig. 8A shows the odmopen interface for opening an object class,

fig. 8B shows the odmclose interface for closing an object class,

fig. 8C shows the odminvoke interface for invoking a method for a specified object,

fig. 8D shows the odmadd interface for adding a new object to the object class,

fig. 8E shows the odmdelete interface for deleting an object from an object class,

4

fig. 8F shows the odmget interface for retrieving an object from an object class,

fig. 8G shows the odmcreate interface for creating an empty object class,

fig. 8H shows the odmdrop interface for removing an object class,

fig. 8I shows the odmchange interface for changing the contents of an object,

fig. 8J shows the odmterm interface which notifies the object data manager that no further ODM functions will be used,

The present system management architecture is based on two key concepts. First, the architecture is highly open and extendable. Second, the architecture uses an object paradigm for representing the description of the system, independent of its network context.

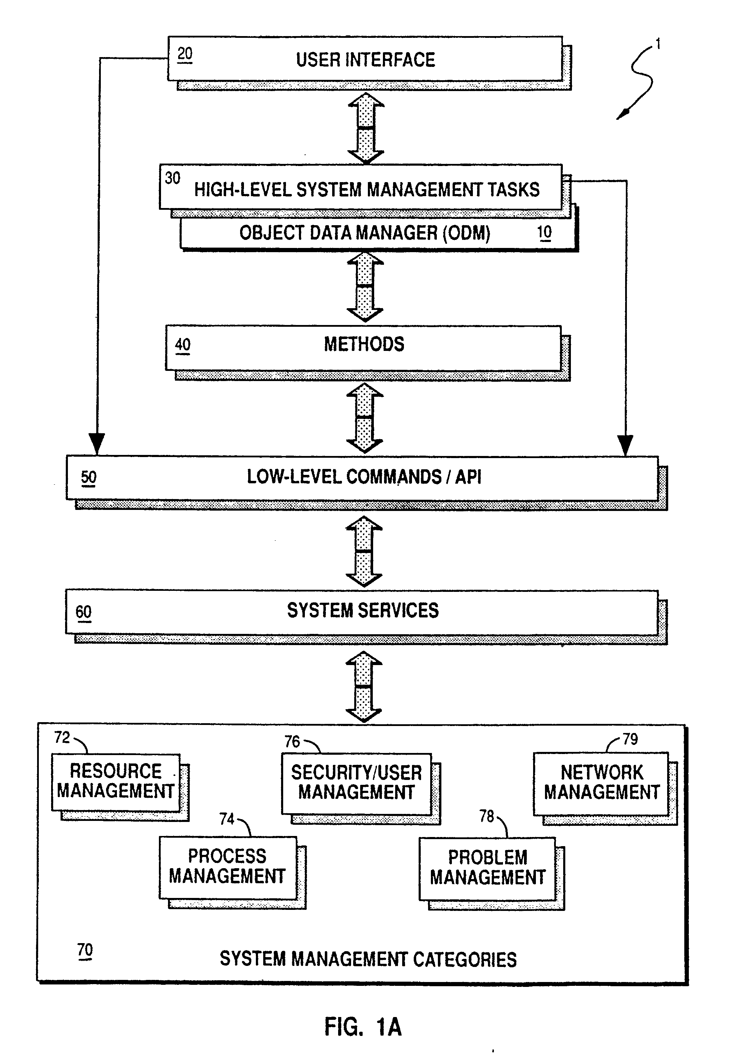

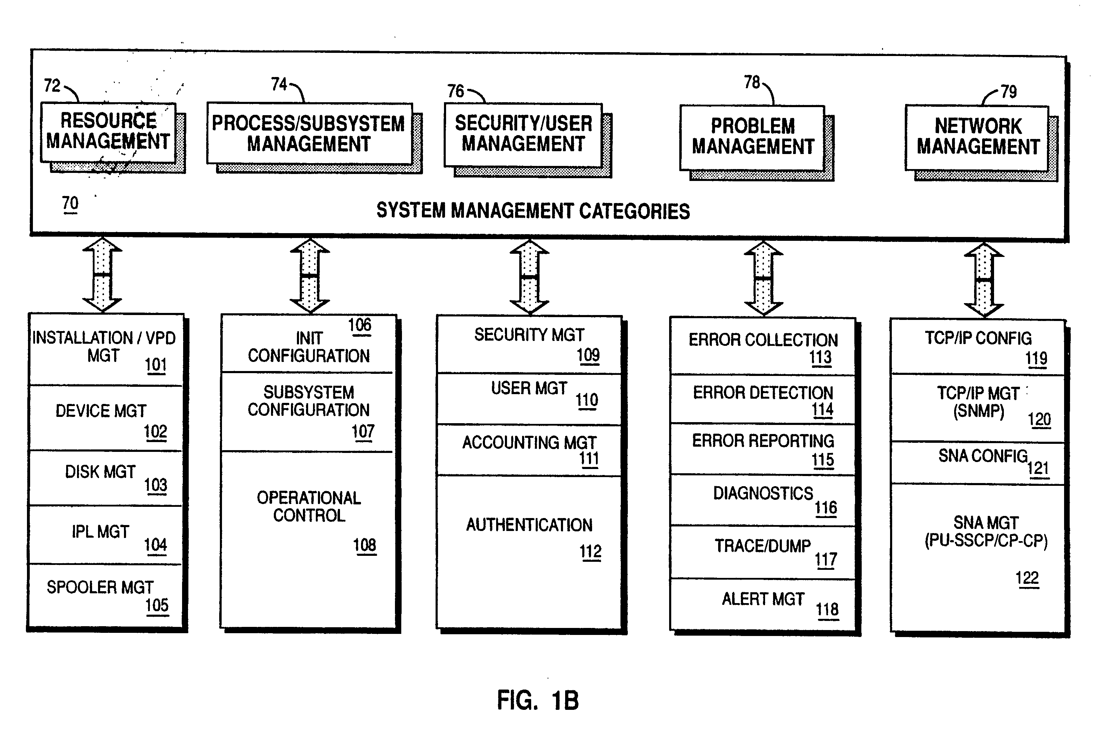

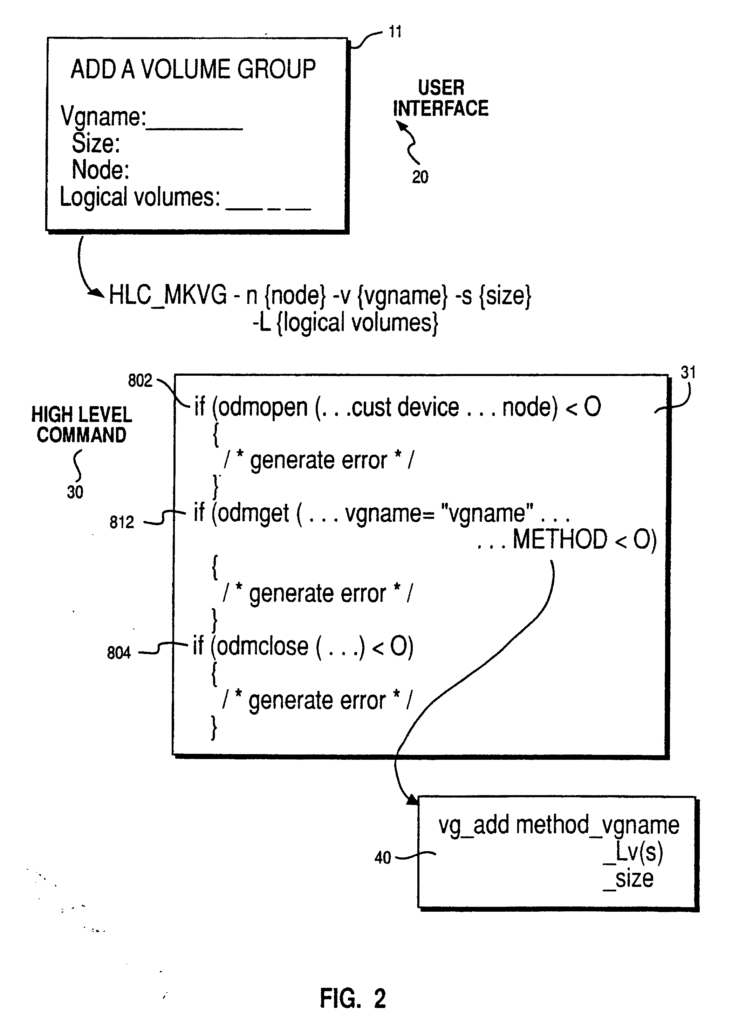

Figure 1 outlines the layers of the system management architecture of the embodiment which provide an open and extendable facility. The user interface 20 is the windows, icons, menus, prompts, and choices presented to the user for the purposes of providing system management tasks. An illustration of a possible user interface menu 11 is shown in Fig. 2. The user interface 20 will collect the correct flags, parameters, and options and invoke the appropriate high-level command 30 to perform the desired task. The user interface level 20, has means for adding to the interface including adding menus, dialogs, and the corresponding commands. The System Management Interface Tool runs on all terminals. The fundamental point is that the user interface is an interchangeable entity within the system management architecture of this embodiment.

High-level commands 30, referred to as system management tasks, effectively provide a sophisticated, complex function geared toward the end-users point of view and not the operating environment. Each high-level command 30 is written as a program or shell script 31, Fig. 2, following the argument syntax and rules as defined by POSIX 1003.2 Section 2.8. The high-level commands 30 execute any number of methods 40 and low level commands 50 in order to complete each user task. Because each high-level command 30 invokes methods 40 through the Object Data Manager (ODM) 10, the high-level commands 30 may be written in a network insensitive fashion to perform generic user tasks, independent of the network context of the object(s) to be manipulated. The essence of this layer 30 is that the user/administrator may develop any number of system management tasks and introduce them easily into the system. Note that high-level commands 30 may be invoked from the shell 31, Fig. 2, without a sophisticated user interface 20. The high level commands can be either in shell script or a C program. Effectively the high level commands perform tasks. In the process of performing these tasks, the high level command invokes methods.

Methods 40 are operations that apply to objects managed by the object data manager 10. The object data manager 10 provides the ability to associate operations to particular objects, thus providing the notion of "active" data. A method 40 is an executable program 41. The emphasis is for methods 40 to be entities that invoke a variety of low-level commands or low level functions 50 and other facilities that perform specific operations on specific objects. The object data manager 10 acts as a passive participant in the process and passes any or all text and return codes generated form the low-level commands 50 back to the application (high-level command 30) so that they may be diagnosed and reported. It is important to note that the high-level commands 30 invoke methods 40 representing operations that apply to a particular object, independent of the location of the object. Furthermore, new methods 40 may be created and associated with objects at any time.

Methods are operations that apply to the objects that are being manipulated and/or configured. The methods are invoked through a method interface which is defined by the object data manager. The object data manager interface defines the method which needs to be invoked, optional arguments that are to be passed to the method, and pointers to the stderr and stdout buffers. The methods themselves can also generate output. The methods invoke commands and low level functions. The commands and low level functions also generate output which is returned to the methods, the methods return the generated output to the high level commands, and the output from the high level command is returned to the user interface which manages the output. Therefore, there is a synergy between the layers as output is returned.

Low-level commands/interfaces 50 are fundamental. They typically provide simple, stateless, atomic operations and are quite often mapped on top of system level services 60, device drivers or subroutines, as executable entities. The low-level commands 50 are called by both methods 40 and high-level commands 30 and are written following the argument syntax and rules as defined by POSIX 1003.2 Section 2.8. Moreover, for those methods 40 which are written in the C language, the application programmer interface (API) 20 for each low-level command 50 is also available.

System Management Services 70 include system calls, subroutines, device drivers and utilities provided by the kernel, Object Data Manager, Logical Volume Manager, configuration, etc., which support the low-level commands/interfaces 50 and their function.

With the rich set of functions offered by the object data manager 10, each of the configurable domains 101-122, Fig. 1B, may be represented, resulting in a consistent data representation across the different domains. Effectively, it has provided an environment whereby a great deal of the intelligence of the traditional application has been moved into the data.

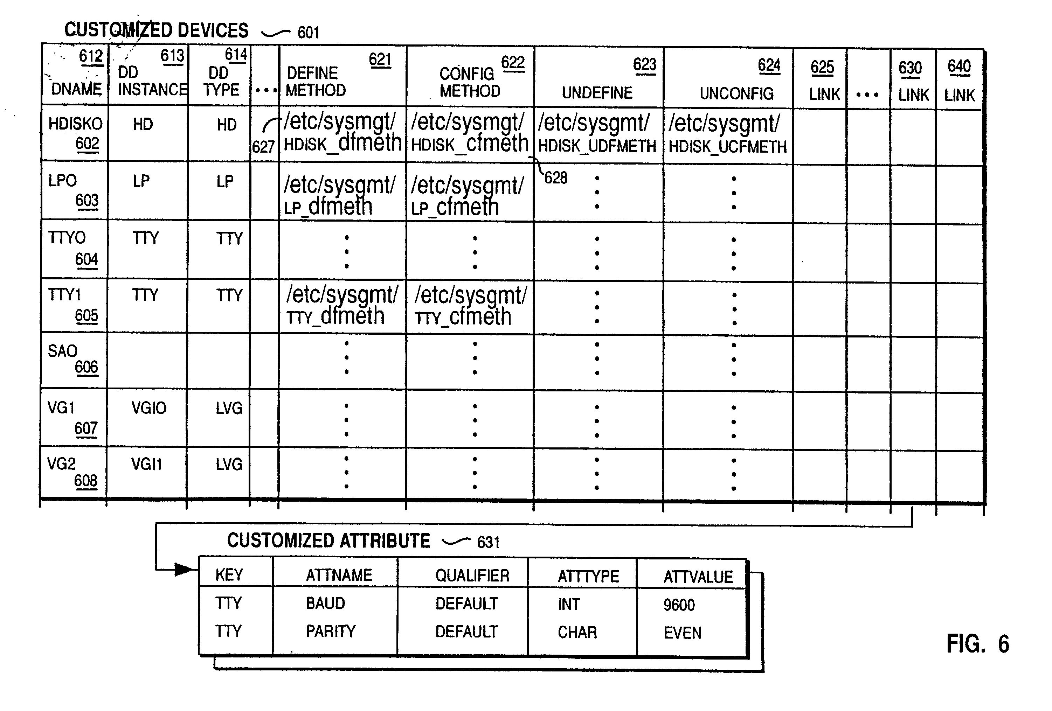

In addition to defining object classes which represent these complex configurable domains and the relationships among them, the object data manager 10 has a variety of methods that been defined for each of the specific object classes, which represent operations that may be applied to each object. For each object, the object specific processing represented by a particular method is performed here, completely insulating all other layers of the details. As an example, for the devices objects 601 (Fig. 6), methods 621-624 have been developed to define 621, undefine 623, configure 622, unconfigure 624, start, stop, test, and problem manage each logical or physical device objects, etc.

The object data manager offers the ability to:

o Define arbitrarily complex data types (called descriptors)

o Define relationships statically and dynamically between object classes/objects

o Apply inheritance such that objects share descriptor values in both a vertical and horizontal direction

o Provide a pseudo transactional processing mode which supports the undo of logical versions

o Associate methods and triggers with objects

o Support authorisation such that access control lists may be associated with each object

The object data manager 10 provides to the application writers the ability to create, relate, manage and manipulate object classes and their objects, without having an understanding of how the data is stored, and without having an understanding of what is needed to perform the operations on the objects. This offers a very powerful tool for representing complex objects and subobjects. In keeping with object orientation, the object data manager allows the user to define methods and triggers that relate operations to each object class or object.

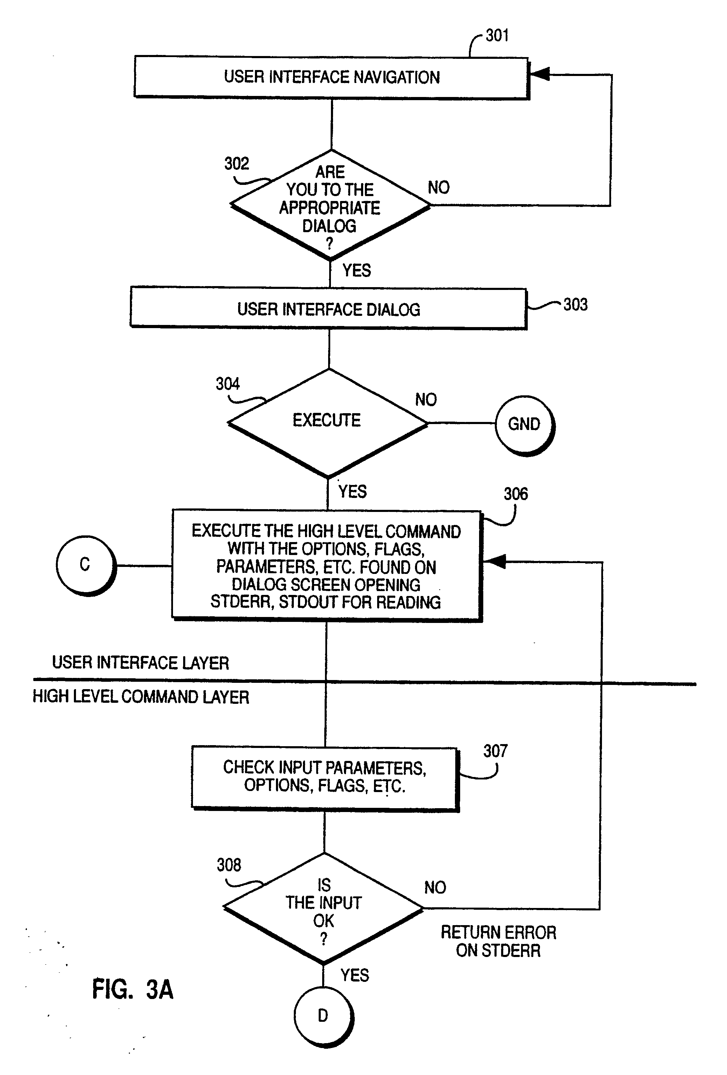

Figs. 3A-3B illustrate the flow of the system and method of this embodiment. First, a user begins at the top of the tree of the user interface 20 and navigates iteratively through the tree, step 301 until the appropriate dialog is reached, step 302, in which the users wishes to enter data, change data, or list data, etc. When the appropriate dialog is reached, the user interfaces with the dialog, step 303, as indicated. Since a dialog represents an action, such as show data, delete data, add data, etc., the dialog is then executed, step 304. The executed dialog may be either adding a disk to a system, adding a user to a system, showing all the devices on the system, showing all the users on the system, deleting devices, or deleting users, etc., depending upon the configurable domain which the user is currently interacting with, and the action represented by the dialog which is chosen by the user.

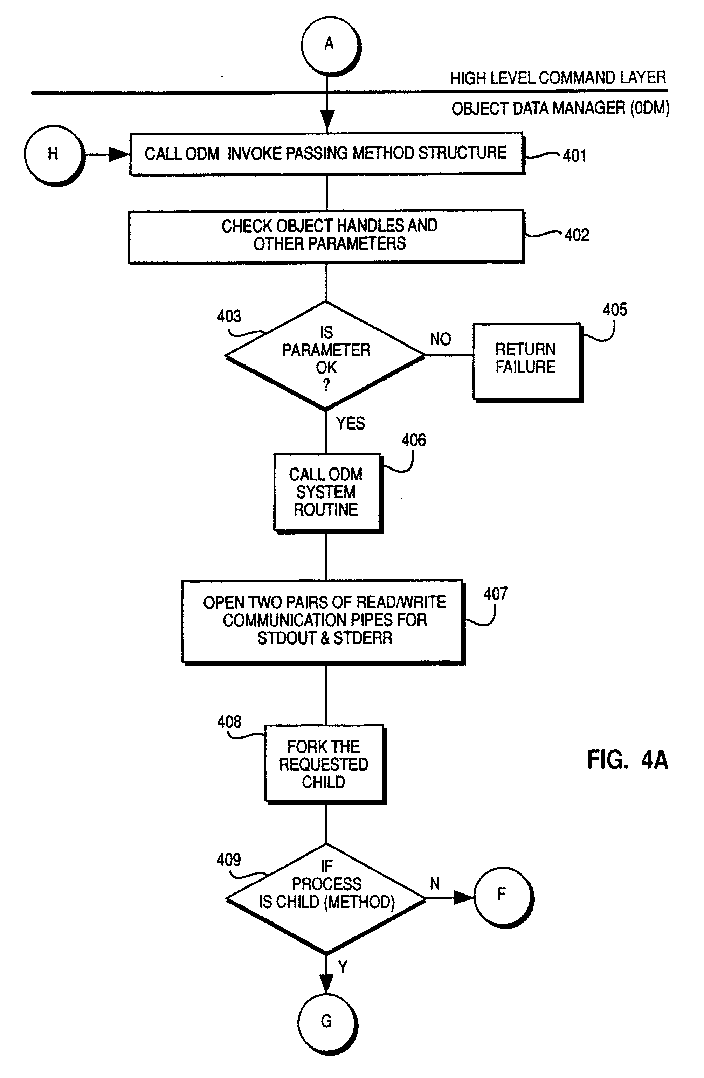

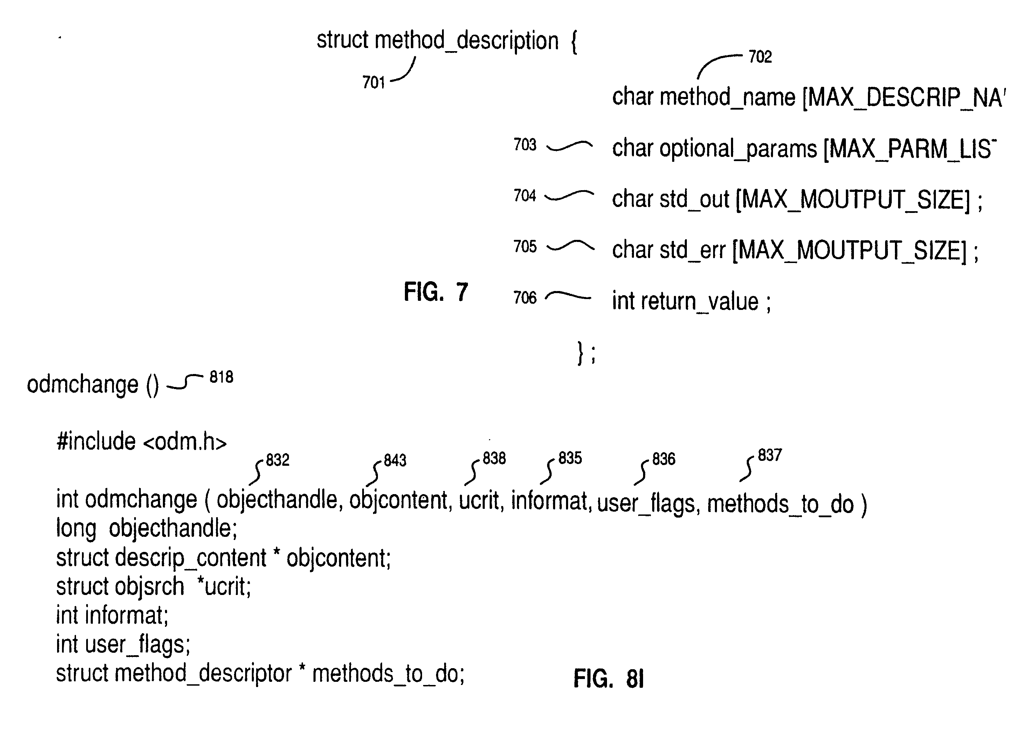

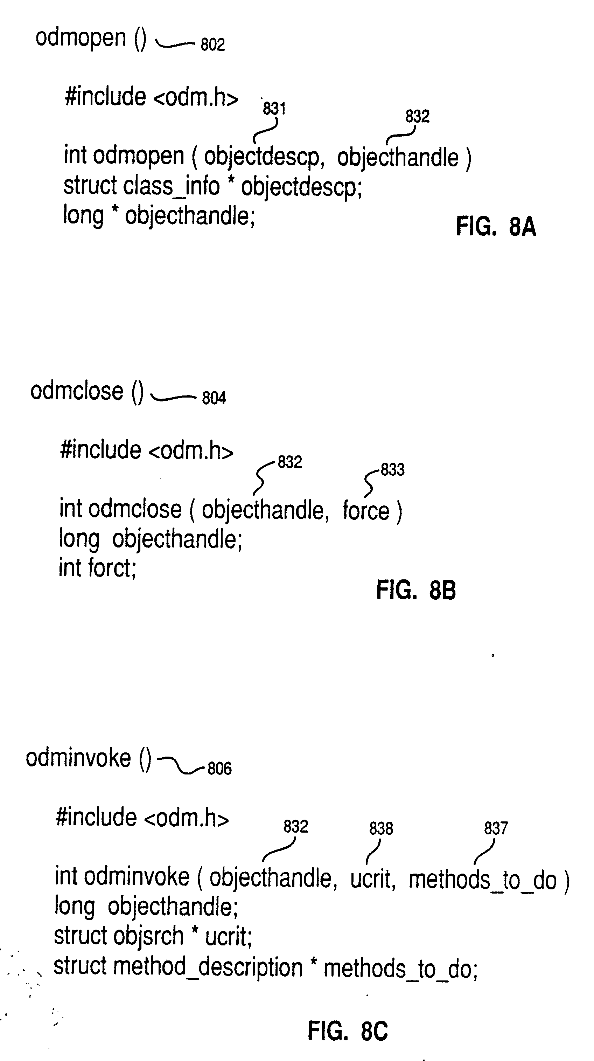

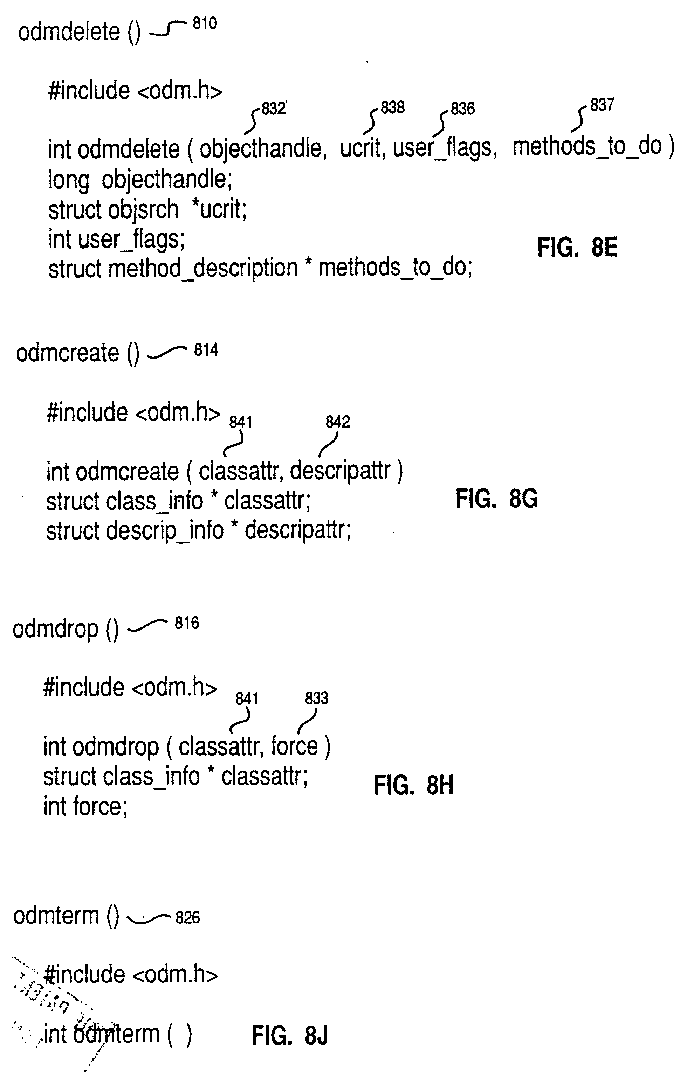

The user interface 20 is a veneer which sits on top of the high level commands. In this way, the user interface 30 effectively executes the executable command, such as shown in Fig. 8A-8J, with all of its options, flags, parameters, that had been filled in at step 303 and step 304 which enabled the dialog. In the process of executing the high level command, the user interface code performs the same function as shown and described later with reference to Fig. 4A in the way in which communication channels are managed. A communication channel is set up for reading standard error and standard output of the high level command that is invoked which is similar to the ODM method invocation facility.

After the dialog is executed, step 304, the high level command layer 30 is executed, step 306. Step 307 checks that the input parameters, options, flags, etc., that have been passed into it are valid. If any of these are not valid, step 308, an error is returned as an error message on the stderr communication channel. If an error is returned in text on the stderr communication channel, and the command was invoked from the user interface, at step 306, the user interface can read the error message and display the errors back to the user at step 303.

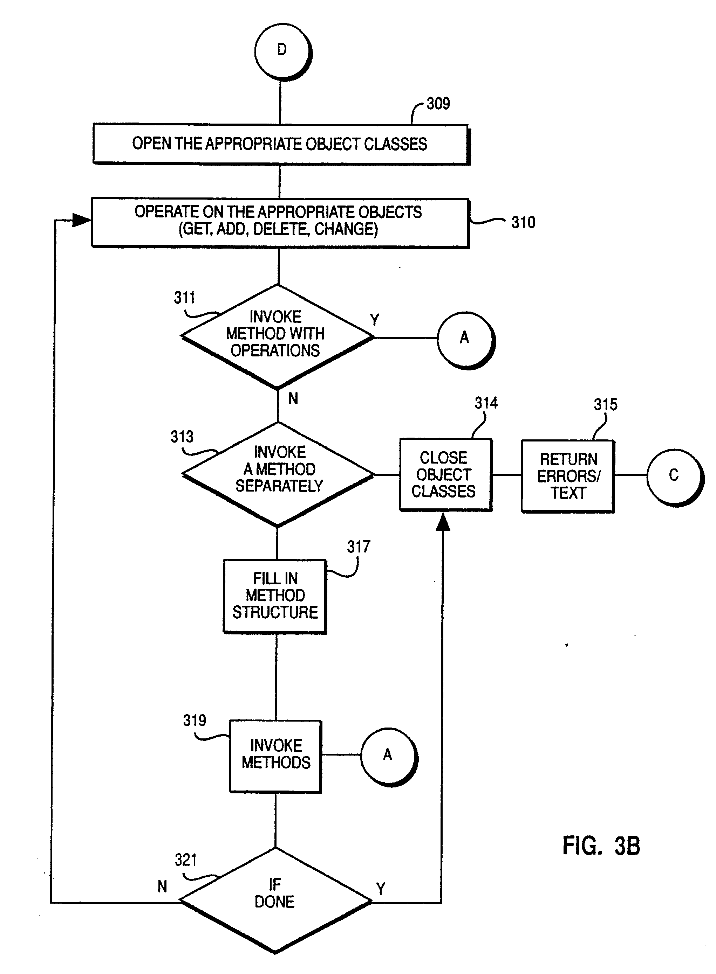

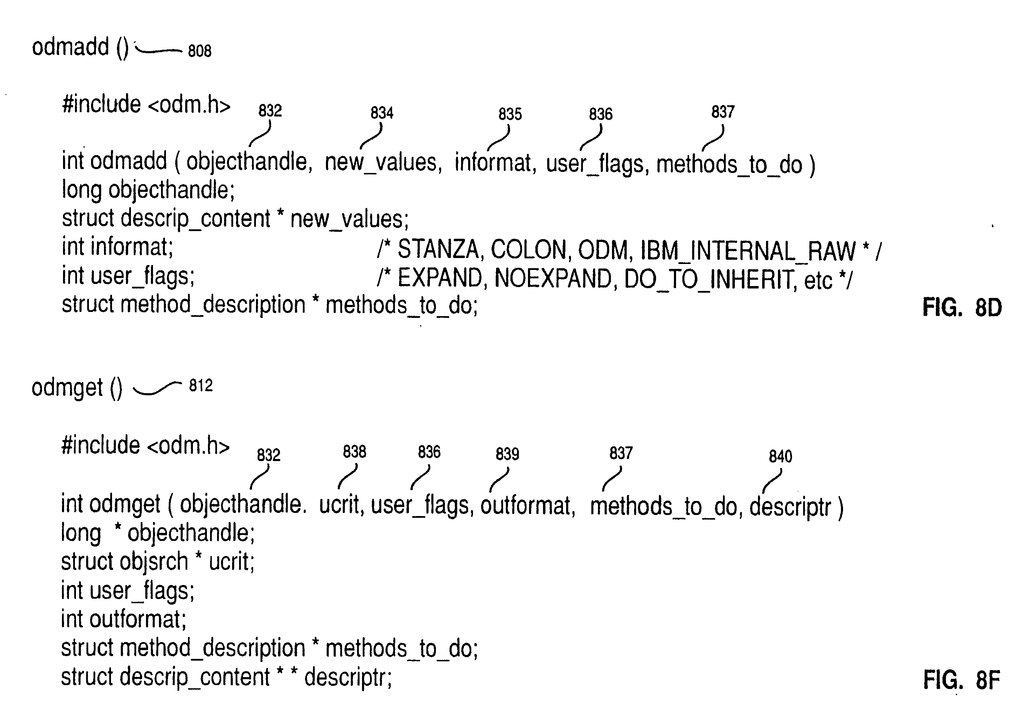

If the user input was correct, step 308, the flow continues at step 309 Fig. 3B. If a high level command or task is using the object data manager to get configuration represented as an object, the high level command would request that the object data manager open up the appropriate object class, or classes, where the objects are found, step 309, and perform the appropriate operations on those objects, step 310. Depending upon how the code is written in the high level command, the methods, which are operations that apply to the objects, can either be invoked as part of the ODM call, step 311, such as the, show command, delete command, etc. as illustrated in odmget 812, Fig. 8F and odmadd 808, Fig. 8D, or after the operation is executed on the object, step 313. In either case, step 401 of Fig. 4A is implemented either after step 311 or after step 319.

When all of the operations are performed, and all of the appropriate methods have been invoked, step 321 determines if the high level tasks are completed. If the high level tasks are completed, the appropriate object class, or classes, is closed, step 314. The appropriate text on standard output and standard error is then returned, step 315.

The invocation of the methods, either step 311 or step 319, causes the ODM to execute the appropriate code to invoke the method, Fig. 4A. The object data manager supports an invoke call which takes a method structure 701 Fig. 7, as its input, step 401. The object data manager takes the parameters 703, Fig. 7, the method name 702, and searches in the data base for the appropriate method that pertains to the object. The object data manager invoke code insures that the method structure parameters, object handles, and pointers are valid, step 402. If all of the parameters are valid, step 403, the object data manager xsystem routine is called, step 406, and opens two pairs of read/ write communication pipes for standard output and standard error, step 407. The child is forked, step 408, by making an identical process to the parent. Step 409 checks to see which of these two processes is the child between the identical copies.

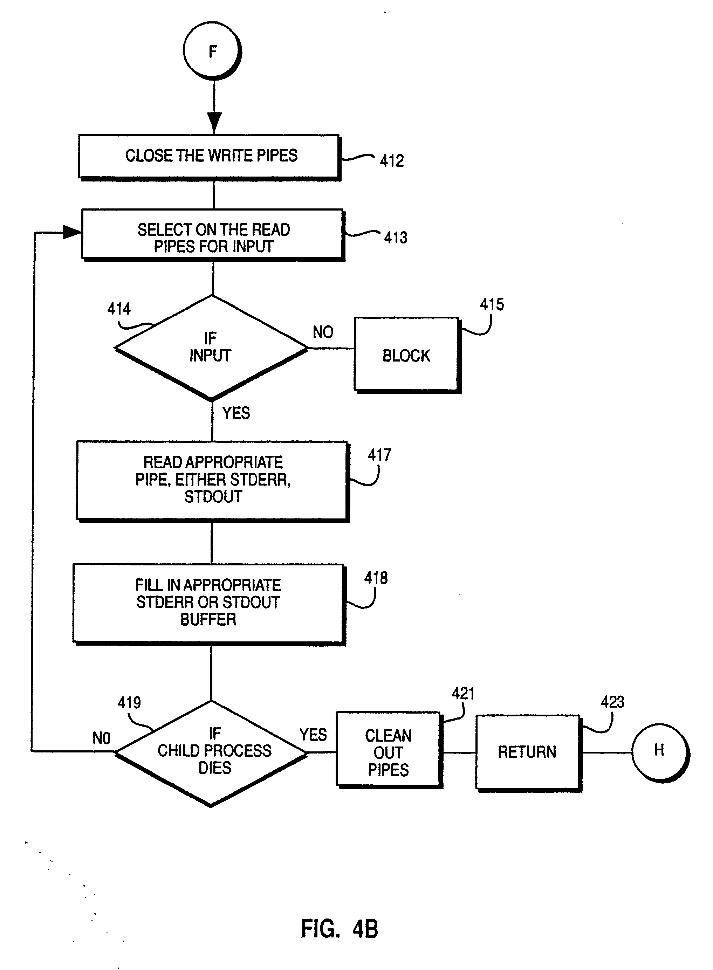

If the process is the parent, the parent process closes all of the write pipes, step 412, Fig. 4B, that were opened from step 407. The parent process selects on the read pipes waiting for input, step 413. The parent process blocks on the select() waiting for output from the child, step 415. If output comes from the child process, step 414, the parent process reads the appropriate pipe, either standard error or standard out, step 418. From the read in step 417, the parent process fills in the appropriate incore buffer with the text that is being read from the stderr or the stdout communication channel, step 418. The parent process then loops back to the select, step 413 waiting for more output from the child process.

A signal handler is used to catch the death of the child process, step 419. When the signal is caught, the parent cleans out the pipes, step 421, and returns, step 423.

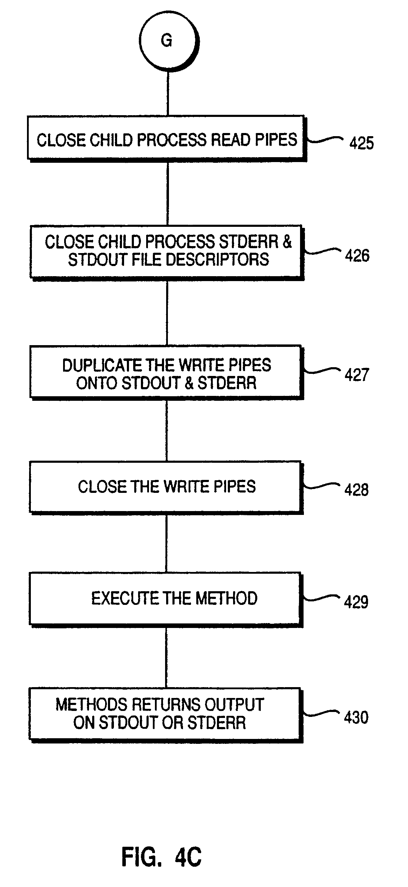

If the process is the child, step 409, Fig. 4A, the child process closes the read pipes, step 425 Fig. 4C, that were created in step 407 Fig. 4A. Then, the child's standard out and standard error file descriptcrs are closed, step 426. The child process duplicates the write pipes, step 427, that were opened in step 407, Fig. 4A, onto the closed stderr and stdout file descriptors. After, stderr and stdout are attached to the write pipes that were opened, then the write pipes are closed, step 428. The appropriate method is then executed, step 429. If the method returns output on stdout or stderr, the parent can catch the output, step 430.

This xsystem code, Fig. 4A - 4C performs the equivalent of a popen system call and a fork/exec system call as known in association with the UNIX operating system as described in the AIX Operating System Technical Reference, second edition, September 1986, order number SV21-8009, part number 74X9990. With the xsystem code, the interface 20 can capture the standard output. The standard output is the output from the high level commands such as the listing of the disks on the system, etc. The valid output comes out on the channel which is referred to as the standard output channel in the UNIX operating system. The interface also has the ability to capture the output from stderr, stderr output (the error output), of the high level command. The interface 10 can then display, scroll, and manage either standard output or standard error.

The above description illustrates the flow from calling the object data manager entry points as shown in Fig. 8A to Fig. 8M, and the method structure Fig. 7 which is filled in by the user/application and the object data manager, and the xsystem code Fig. 4A - Fig. 4C that is invoked within the internals of the object data manager.

Fig. 2, Fig. 6, Fig. 5A, and Fig. 5B illustrate the uniform operation of the system management facility of this embodiment across configurable domains through the loosely coupled layers within the system management facility in conjunction with an object oriented representation of the configuration data. In reference first to Fig. 2 and Fig. 6, the user interface 20 creates a dialog for the configurable domain of devices 102, Fig. 1B, by asking for the volume group name, the size, the node, and what logical volumes are in it. The high level command 30 performs an odmopen 802 on the customised devices object class 601 on a particular node. The high level command 30 also attempts to perform an odmget 812 on the volume group name to make sure the volume group does not already exist. The high level command 30 then invokes the add method 40 passing the appropriate parameters such as the volume group name, the logical volumes, and the size, etc. Then the high level command 30 performs an odmclose 804. The vg_add method effectively adds objects of type logical volume group (lvg) to the customised devices object class 601, and to the customised attribute object class 631. The high level command 30 opens the appropriate object classes, adds the objects, closes the object classes, and returns any text.

Fig. 6 shows an example of the customised devices definition 601. The object class customised devices 601 is part of the device management configurable domain 102, Fig. 1B. The configurable domain devices includes both real devices and logical devices. The names "hdisk0" 602, "lp0" 603, "tty0" 604, "tty1" 605, and "sa0" 606 represent names of physical entities, such as hard disks, line printers, terminals, and a serial adapter, on a system. These are device objects of type physical. Volume group 1, vg1, 607 and volume group 2, vg2, 608 are logical entities, i.e. objects. They are devices of type logical. These logical devices represent groupings of physical disks that make up volume groups in the logical volume manager. The system management facility of this embodiment allows the same configuration object class to represent both physical and logical devices. There is a link 630 in the customised devices 601 to customised attributes 631 which links the attributes to each device in the customised devices 601 object class. A link signifies that there is a relationship to another object class.

The operation of the object data manager is illustrated with reference to Fig. 6 as follows. The data, e.g. devices 612, are defined through the fields 613-640. The object data manager will transparently traverse the links 630 to the object classes 631 that relate to the object class that is being searched. For example, if a user opens up the customised object class 601 and requests all of the data for hdisk0 602, the object data manager would retrieve all of the information in the customised devices 601 and the customised attributes 631 relating to hdisk0 602.

The executable methods 621-624 are columns within the object class 601. The executable program for the methods can be found in the files defined by the path names within the column fields. For example, the define method 621 for hdisk0 602 is found through the path name "/etc/sysmgt/hdisk__dfmeth". When the object data manager invokes a method 621-625, the method is executed. For example, to configure an object of type hard disks, there is a config method 622 for hard disks.

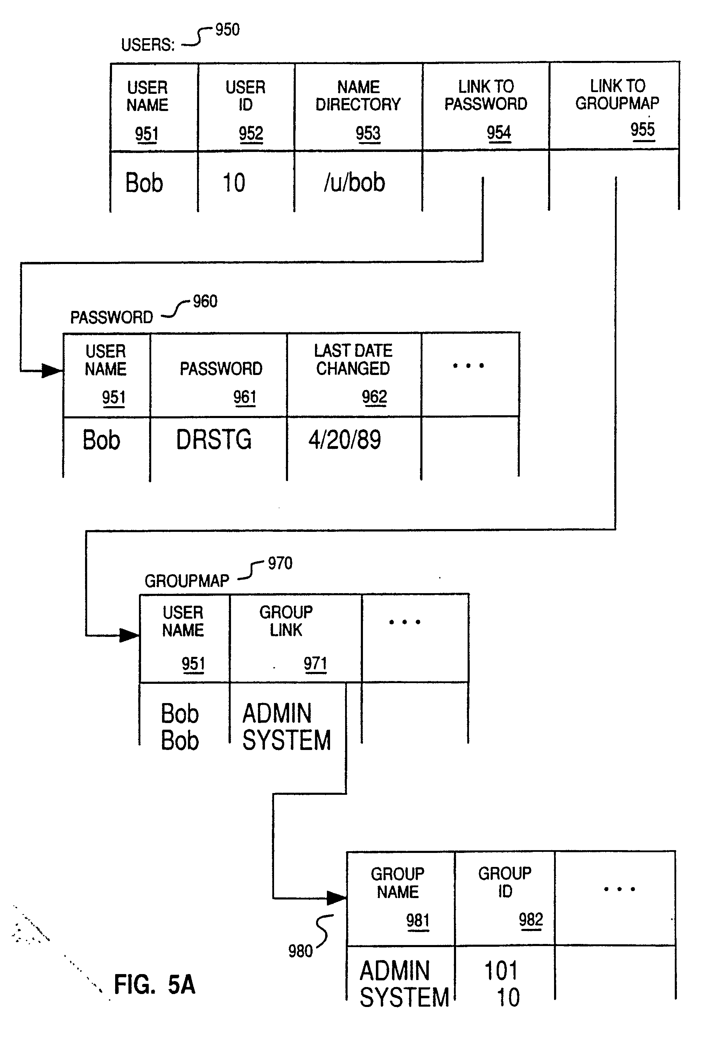

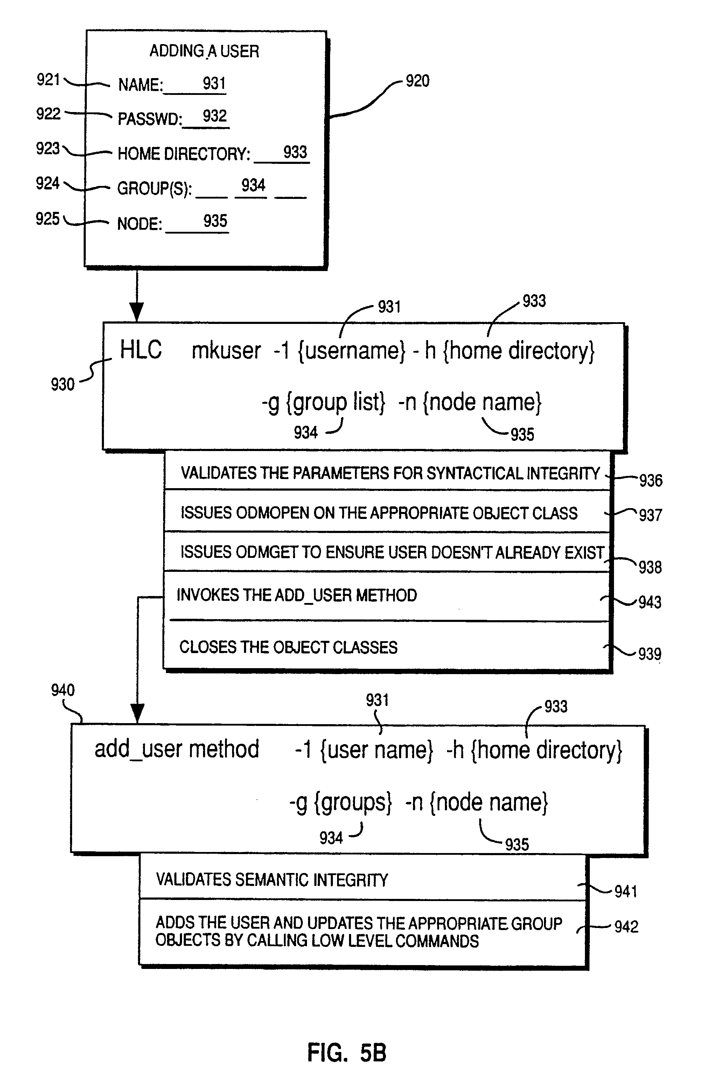

Another configurable domain, user management 110, Fig. 1B, is illustrated with reference to Figures 5A and 5B which illustrates how one would use a user object 950 in the object data manager. A user interface 920 defines the appropriate dialog that is needed, for example, to add a user. The dialog 920 would ask for the user name 921, the password 922, the home directory 923, the groups 924 that the user wants to belong to, and the node 925 that the user is to be added to. Once this data was entered, the high level command makeuser, mkuser 930, would be invoked. The high level command 930 takes all of the parameters 931-935 that were entered in the dialog 920. The high level command 930 validates the parameters for syntactical integrity, 936, issues an odmopen 802 (Fig. 8A) on the appropriate object class, e.g. users 950 Fig. 5A, and issues and odmget 812 (Fig. 8F) to ensure that the user does not already exist, 938. Issuing the odmget could also be found in a method. Next, the high level command 930 invokes the add__user method 940 to add the user object to the object classes. The add__user method again takes the set of parameters 931-935 to validate the semantic integrity by determining whether a user already exists, and whether the groups exists, 941. If these do not already exist, the method 940 adds the user to the appropriate object class 950 (Fig. 9A), and updates or adds the appropriate group information, 942. All of this would be done by calling the appropriate low level functions.

Fig. 5A represents an example of data that would be added by the method 940 of Fig. 5B. Fig. 5A also illustrates an example of object classes representing user information. A user object class 950 has a user name 951, user id 952, the home directory 953, etc. A link 954 to the password object class 960 contains the user name 951, the user password 961, and the date the password was last changed 962, and other relevant information. The password object class 960 is a separate object class for security requirements. In the user object class 950, there would also be a link to a groupmap 970 which would provide the relationship between the users and the groups that the users belonged to. In this example, the user Bob belongs to the admin group and the system group. The groupmap object class 970 has a link 971 to a group object class 980 where the group ids 982 can be obtained along with other relevant information on the groups themselves.

Figures 8A-8J illustrate some of the calls and data structures that utilise the object data manager and invoke methods. Both the high level commands and the methods utilise this interface to the object data manager. For example, the odmget 812, Fig. 8F, specifies the criteria of the objects to be retrieved, passes the parameters, and invokes the methods for the retrieved object. The method structure 837 contained within the odmget call 812, Fig. 8F, and the odmadd call 808, Fig. 8D, is shown as 701 in Fig. 7.

Referring to Fig. 7, a user would supply method names 702 to invoke, any optional parameters 703 that need to be passed down to the method, whether the output of the method is to be returned on stdout 704, and whether the error is to be returned on stderr 705. The method is then executed. The object data manager supplies the return code value 706 of the method. In addition, the object data manager supplies the buffer information for stdout 704 and stderr 705 from the code as flowcharted in Figs. 4A-4C.

Referring to Fig. 8A-8J, the following odm interfaces are described.

odmopen() 802, opens an object class.

odmclose() 804, closes an object class.

odminvoke() 806, invokes a method for the
        specified object.

odmadd() 808, adds a new object to the object
        class.

odmdelete() 810, deletes an object from the
        object class, given search criteria.

odmget() 812, retrieves an object from an object
        class.

odmcreate() 814, creates an empty object class.

odmdrop() 816, removes an object class.

odmchange() 818, changes the contents of an
        object.

The subroutine odmopen() 802, Fig. 8A opens the object class and locks in the manner defined through either the class__info structure or the ODM__env structure. If EXPAND is specified, all of the class's subclasses are opened also.

objectdesc 831 description of the object class to open.   You must
        specify:
        objectdesp: class_name        name of the object
                class
        objectdescp: class_rep_path  default path of
                master index.   If not specified, the master
                index is in /etc/objrepos.
        objectdescp:lock_op                overrides the lock
                type specified at odminit().   If


                ODM_DEFAULT, default was specified at
                odminit().
        objectdescp:checkpoint        overrides the
                checkpoint type specified at odminit().
                If OMD_DEFAULT, default was specified at
                odminit().
        objectdescp: expand_flag        one of EXPAND or
                NOEXPAND.   EXPAND means open sublcasses,
                NOEXPAND means don't open subclasses.
                The default is EXPAND.

objecthandle 832 filled in by odmopen() and will be the ID for this object class. This variable will be used by most of the ODM subroutines. Upon successful completion, the odmopen() subroutine returns the number of columns in the expanded object. If the subroutine fails, a value of -1 is returned.

The subroutine odmclose() 804, Fig. 8B performs a virtual close of an object class. The object class is not actually purged from memory unless an odmopen() at some later time runs out of available slots. In this case, those object classes which have been odmclosed will actually be closed out. The force flag provides the capability of forcing the requested object class to actually be closed out.

```
        objecthandle 832 the object class ID returned from odmopen().


        force 833 one of FORCE, NOFORCE, or ODM_DEFAULT.
            FORCE   requested object will be closed, and

                    purged from memory.

            NOFORCE requested object will be closed, but

                    not purged from memory.

            ODM_DEFAULT  requested object will be closed;

                    the option specified at odminit() will

                    determine whether the object class is

                    purged from memory.
```

Upon successful completion, a value of O is returned. If the odmclose() subroutine fails, a value of -1 is returned.

The subroutine odminvoke() 806, Fig. 8C, invokes a method for the specified object(s). This provides the capability of invoking methods without adding, changing, deleting, or retrieving objects. Upon success completion, a value of O is returned. If the odminvoke() subroutine fails, a value of -1 is returned.

The subroutine odmadd() 808, Fig. 8D, given the object class to add to and the corresponding data, will add a new object to the object class. You can add one object to each sub-class of this object class. If inherit substitution is done, then the values to be added will be replaced by the inherit constant if they exactly match the corresponding value.

objecthandle 832 the ID of the object class; returned
    from odmopen()

new_value 834 pointer to the new values to add.  the
    data will be formatted differently depending on
    the value of the informat flag.

informat 835 describes the format of the data.  It is
    one of:  COLON, STANZA, ODM, or INTERNAL_RAW.

    informat = COLON    new_values will point to
                a colon phrase.
    informat = STANZA   new_values will point to a
                stanza phrase.
    informat = ODM      new_values will point to an
    array of descript_content structures.  This
    is the same structure returned by the
    odmget() subroutine.  Descriptors may be in
    any order for any class or subclass in the

object class.  This array need only specify descriptors which need to be initialised.

informat = INTERNAL_RAW   new_values will point to a(n array of) pointer(s) to the new values to add.  If DO_INHERITING is specified, then the inherit constant will be added for that descriptor.  These new values are assumed to be in the same order as the descriptors would be returned by odmgetdescp().  If the new value is for a descriptor of type ODM_LONG or ODM_SHORT, then the value must be in long or short ormat, respectively.  For all other descriptors, the value must be in char format.  A descriptor of the type ODM_REPEAT will not have any value associated with it, but the new_values must still have a place for it.

user_flags 836  Specifies whether the object is being added to the expanded object class, and whether an inherit object is being added or inherit substitution should be done.  One of the EXPAND or NOEXPAND should be logically or'd with one of DO_TO_INHERIT, DO_INHERITING or ODM_DEFAULT:

EXPAND          add to the expanded object
                    class.
NOEXPAND        add to the non-expanded
                    object class.
DO_TO_INHERIT  add the inherit object to
                    the object class.
DO_INHERITING  add the object but check the
                  values to see if they're identical to
                  the inherit object.  If so, add the
                  inherit constant instead of the value
                  itself.

methods_to_do 837 pointer to an array of

12

method_description structures which indicate the methods to execute when the add is performed. Only the method which are indicated are executed. Note that triggers will execute regardless.

```
method_to_do: method_name       name of the
                method descriptor to perform.
methods_to_do: optional_params any
                optional parameters to be used in
                the method.
methods_to_do:  std_out         standard
                output from the method
methods_to_do:  std_err         standard error
                output from the method.
methods_to_do:  return_value  return value
                of the method.
methods_to_do:  capture_out   one of TRUE or
                FALSE whether you want ODM to
                capture the output.
```

The end of the array of structures is marked by the method_name having a null value. If methods_to_do = NULL then no methods will be performed.

Upon successful completion, an ID for the object is returned ( 0). If the odmadd() subroutine fails, a value of -1 is returned.

The subroutine odmdelete() 810, Fig. 8E, given the object class to delete from and a search criteria pointer, deletes all instances which satisfy those criteria.

```
objecthandle 832 the object class ID returned by
                odmopen().
ucrit 838 contains the criteria used to determine
```

```
                which objects to delete.
                ucrit: searchstring is the object selection
                       string.  If its string length is zero,
                       then all objects are selected to be
                       deleted.
                ucrit: repeats_interested = DELETE_ALL
                       specifies to delete all the object which match
                       the criteria.
                ucrit: rspecify(0).iterator can be set to
                       specify which object to delete if several
                       objects match the selection criteria.
```

You can also delete an object by its ID as returned by odmadd(). There is a #define in odm.h with the name of the object class descriptor which contains the object ID. You need only specify a criteria with this descriptor name and the object ID returned by odmadd().

user__flags 836 specifies whether you are deleting from the expanded object class, and whether you are deleting the inherit object or want inherit substitution done. Should be one of EXPAND or NOEXPAND logically or'd with one of DO__TO__INHERIT, DO__INHERITING or ODM__DEFAULT. The inherit object must exist if either inheriting options are specified.

```
        EXPAND          delete from the expanded
                        object class.
        NOEXPAND        delete from the non-expanded
                        object class.
        DO_TO_INHERIT   the inherit object in the
                        object class is deleted.
        DO_INHERITING   the user's criteria are


                        checked and modified, if
                        necessary, to select those objects
                        which would satisfy the criteria
                        because of inheriting.
```

methods__to__do 837 pointer to an array of method__description structures which indicate the methods to execute when the delete is performed. Only the methods which are indicated are executed.

```
methods_to_do: method_name                    name of

        the method descriptor to perform.

methods_to_do: optional_params      any

        optional parameters to be used in the

        method

methods_to_do: std_out              standard

        error output from the method.

methods_to_do: return_value         return

        value of the method.

methods_to_do: capture_out          one of

        TRUE or FALSE whether you want ODM to

        capture the output.
```

The end of the array of structures is marked by the method_name having a null value. If methods_to_do = NULL then no methods will be performed.

Upon successful completion, a value of 0 is returned. If the odmdelete() subroutine fails, a value of -1 is returned.

The subroutine odmget() 812, Fig. 8F, given the object class, will retrieve the objects from the class which meet the search criteria. If the object class is made of compound object classes, the user can elect to either expand the output or not. In addition, this subroutine will support the buffer in ODM, STANZA, or COLON format.

Any descriptor which is not of the type ODM_SHORT or ODM_LONG and has its value as NULL will not be shown.

The odmget() subroutine needs to be called iteratively in order to fetch multiple objects meeting the selection criteria. This is accomplished in the following manner: 1) to get the first object provide a valid ucrit address to point to a valid search structure 2) for each subsequent call to get the NEXT object, supply a ucrit address of NULL.

objecthandle 832 object class ID returned from

odmopen().

ucrit 838 the criteria used to determine which object

the user wants.

ucrit: searchstring will hold the selection

criteria for the object class.

ucrit:searchstring(0)='/0 specifies a global

search criterion or you can enter criteria in SQL format.

This criteria can include descriptors from the top object

class, as well as subclasses if the object class was

opened expanded.  If the descriptor name is not unique to

the expanded object class, it should be qualified by the

name of the object sub-class in which it resides (i.e.

newclass.name where name is the descriptor name, and

newclass is the name of the object class qualifying

name).

user_flags 836 specifies whether we are getting the

expanded object class, and if the user is getting the inherit

object or wants inherit substitution done.  Should be one of EXPAND or NOEXPAND logically or'd with one of DO_To_INHERIT, DO_INHERITNG,

or ODM_DEFAULT.

EXPAND          get an expanded object

NOEXPAND        get a non-expanded object

DO_TO_INHERIT   get the inherit object of the

object class

DQ_INHERITING  get the object and substitute
the inherit value if necessary.  Also, modify
the user criteria to select those objects which
satisfy the criteria because of inherited
values.


outformat 839 describes the format of the data
retrieved and put into descriptr.  It is one of:
COLON, STANZA, or ODM.

outformat = COLON        * descriptr will point
                            to a colon phrase.

outformat = STANZA       * descriptr will point
                            to a stanza phrase.

outformat = ODM          * descriptr will point
                            to an array of
                            descrip_content
                            structures.


methods_to_do 837 pointer to an array of
method_description structures which indicate the methods to execute
when the add is performed.  Only the methods which are indicated
are executed.


methods_to_do: method_   name of the
                    method descriptor to perform.
methods_to_do: optional_params  any optional
                    parameters to be used in the method·
methods_to_do: std_out        standard output
                    from the method.
methods_to_do: return_value    return value of
                    of the method.
methods_to_do: capture_out    one of TRUE or
                    FALSE whether you want ODM to
                    capture the output.

17

The end of the array of structures is marked by the method_name having a null value. if methods_to_do = NULL then no methods will be performed.

descriptr 840 pointer to the desired object. This value must be (struct descrip_content*) NULL when passed to odmget(). If not NULL, ODM will attempt to execute odmfreeget(descriptr). See the note below for more information. If outformat is STANZA or COLON, then the object is found in the first descrip-content structure. If the outformat is ODM then descriptr will point to an array of descrip_content structures which will have pointers to the object's values. The number of descrip_content structures will be the return value of the successful odmget().

```
struct descrip_content(
      char *descrip_value;
            /* pointer to a value in either a
            short, */
            /* long, or char (null terminated
            format*/
      int ODM_type;
            /* the ODM type of this descriptor */
      int iterator;
            /* currently unused */
      char descrip_name (MAX_DESCRIP_NAME);
            /* object class which this
            descriptor */
            /* came from */
      char parent_descrip (MAX_DESCRIP_NAME +
                        MAX_CLASS_NAME _ 10);
            /* object class and descriptor
            which */
            /* linked to the object class from
```

```
                                which */
                                /* this descriptor came */
                        int descrip_number;
                                /* the unique id for this .
                                descriptor. */
                        int size;
                                /* length of this descriptor
                                value */
                        int linktome;
                                /* TRUE if this column is linked
                                to; */
                                /* FALSE otherwise */
                        )
```

Note: Because the ODM uses noncontiguous allocation schemes, it will perform the dynamic allocation of memory on behalf of the caller. It is important that both the ODM and the caller properly manage this dynamic memory. Specifically, the user may pass to odmget() different descriptor pointers for the purposes of caching multiple objects from any number of object classes at the same time. If this is so and the pointers passed to odmget() are automatic variables, odmfreeget() must be called before exiting the local function (this will free the memory). If the caller is using pointers which are not automatic, then one does not need to worry about calling odmfreeget(). The motivation for odmfreeget() is to ensure that the ODM is not continually allocating memory to pointers which are transient and thus resulting in dangling memory with no way to manage it.

Upon successful completion, the odmget() subroutine returns the number of descriptors. If the subroutine fails, a value of -1 is returned.

The subroutine odmcreate() 814, Fig. 8G, will create an empty object class by establishing the necessary directory structures and creating the necessary files. The object class will be created at the location determined by the node and availability scope in the class_info structure. If the object class is created successfully, it will be registered with the appropriate Object Manager. The object class name must be unique within its availability scope.

classattr        a description of the object class to
        create, it contains:

        classattr: class_name         name of the object
                class to create
        classattr: class_rep_path       path for the object
                class.  If not specified, the
                object class will be created in
                /etc/objrepos.
        classattr: num_descrip   number of
                descrip_info structures passed in by
                the user.  This might not be the same number of
                descriptors in the created object class since the ODM
                might create additional descriptors based on the values
                in the descrip_info structure.

descripattr      a pointer to an array of descrip_info
        structuresd where each structure contains:

        descripattr: descrip_name       descriptor
                name
        descripattr: ODM_type         ODM type.
        descripattr: iterator         number of
                times to repeat descriptor
        descripattr: key              flag to
                specify whether to create index
        descripattr: size             specifies
                the descriptor length for
                ODM_CHAR, ODM_LONGCHAR, and

```
                    ODM_BINARY types
       descripattr: class name        specifies
                    the object class to use for
                    ODM_REPEAT and ODM-LINK types
       descripattr: link_descrip      specifies the
                    descriptor in the linked/vlinked object class
                    which will hold the value to link/vlink for
                    ODM_LINK and
                    ODM_VLINKCLASS.
```

Upon successful completion, a value of 0 is returned. If the odmcreate() subroutine fails, a value of -1 is returned.

The subroutine odmdrop() 816, Fig. 8H, removes an entire object class and all of its objects. Not that there is no checking done to see if there are other object classes are linked to the object class to be removed.

```
       class_info          a description of the object class
                    to drop.  Currently, the only value needed is:

                    class_info: class_name name of the object class
                          to delete.
       force                one of FORCE or NOFORCE.
              FORCE     object class is deleted even if the
                        object class links to other object
                        classes.
              NOFORCE   If this object class links to other
                        object classes, the class is not
                        deleted.
```

Upon successful completion, a value of 0 is returned. If the odmdrop() subroutine fails, a value of -1 is returned.

The subroutine odmchange() 818, Fig. 8I, given the object class to modify, the search criteria and the new data (only for attributes which need to change), will modify all objects which satisfy the search criteria.

objecthandle 832 object class ID returned from
odmopen().

objcontent 843 pointer to the new value to add. The
data will be formatted differently depending
on the value of the informat flag.

informat = COLON    objcontent will point to a
colon phrase.

informat = STANZA    objcontent will point to a
stanza phrase.

informat = ODM    objcontent will point to an
array of descrip_content structures.
This is the same structure returned by the
odmget() subroutine.

ifnormat = IBM_INTERNAL_RAW  objcontent will
point to a(N array of) pointers(s) to the
values to change. If a pointer to a value is
NULL, then no change is made to that
descriptor. These new values are assumed to be
in the same order as the descriptors would be
returned by odmgetdescp().

ucrit 838 the criteria used to select an object or
objects. This criteria can include descriptors from the top object
class, as well as subclasses if the object class was opened
expanded. If the descriptor name is not unique to the expanded
object class, it should be qualified by the name of the object
sub-class in which it resides (i.e. newclass.name where name is the
descriptor name, and newclass is the name of the object class
qualifying name). For the classes you can specify either all
matching objects or only a certain object will be changed.

ucrit: repeats_interested    specifies how many

object classes in which you want a certain object to be
changed.

ucrit: specify (0).objname     object class

ucrit: specify (i).iterator    the specific object
   in the class to change.  If you do not specify an object
   to be changed in the object class, then all objects which
   match the criteria (either the user criteria or link
   criteria) will be changed.

You can also change an object by its ID as returned by odmadd(). There is a #define in odm.h with the name of the object class descriptor which contains the object ID. You need only specify a criteria with this descriptor name and the object ID returned by odmadd(). See the example below.

user_flags 836 specifies whether we are changing the
   expanded object class, and whether the user is changing the inherit
   object or wants inherit substitution done.  Should be one of EXPAND
   or NOEXPAND logicall or'd with one of DO_TO_INHERIT, DO_INHERITING,
   or ODM_DEFAULT.

EXPAND          change the expanded object class.

NOEXPAND        change the non-expanded object
                class.

DO_TO_INHERIT   change the inherit object in the
                object class.

DO_INHERITING   change the object but check the
                values to see if they are identical to the
                inherit object.  If so, change the descriptor
                to the inherit constant instead of the value
                itself.

methods_to_do 837    pointer to an array of method_

23

descriptor structures which indicate the methods to execute when the add is performed.  Only the methods which are indicates are executed.

methods_to_do: method_name name of the
    method descriptor to perform.

methods_to_do: optional_params        any optional
    parameters to be used in the method

methods_to_do: std_out      standard
    output from the method.

methods_to_do: std_err      return value
    of the method.  The end of the array of
    structures is marked by the method_name having
    a null value.  If methods_to_do = NULL then no
    methods will be performed.

methods_to_do: capture_out    one of TRUE
    or FALSE whether you want ODM to capture the
    output.

Upon successful completion, a value of 0 is returned. If the odmchage() subroutine fails, a value of -1 is returned.

The subroutine odmterm() 826, Fig. 8J, notifies the ODM that no further ODM functions will be used so that all ODM internal data structures can be freed and all updates to the object repository are propagated to disk. After this subroutine is called, the odminit() subroutine must be called again before using any of the ODM subroutines. Upon successful completion, a value of 0 is returned. If the odmterm() subroutine fails, a value of -1 is returned.

This invention offers an environment that is layered, open and extendable, such that the end-user community may augment their system management tools and facilities with great ease. Furthermore, with the support provided by the object data manager, the system's definition is represented in a uniform and robust fashion.

While the invention has been particularly shown and described with reference to a preferred embodiment, it will be understood by those skilled in the art that various changes may be made without departing from the scope of the invention.

**Claims**

1. A system for providing system management to a user of a data processing system, the system comprising:
means for representing data of a plurality of configurable domains in an object oriented database within the data processing system; and
means for performing tasks on the data of the plurality of configurable domains, which means comprises a plurality of layers, wherein the layers are independently extendable, by a user, for each of the plurality of configurable domains.

2. A system as claimed in claim 1 wherein a first one of the loosely coupled structural layers is a user interface, independent from a plurality of functions operating on the data represented in the object oriented database, the user interface receiving parameters from a user for specifying a user system management task to be performed on the objects.

3. A system as claimed in claim 2 wherein the first layer comprises means for invoking a second layer;

the second layer comprising high level command means for performing at least one general operation related to the user system management task but independent of a relationship of the objects.

4. A system as claimed in claim 3 wherein the second layer comprises means for invoking a third layer; the third layer comprising means for performing at least one specific operation on at least one of the objects in response to the user system management task, independently of the object location.

5. A system as claimed in any preceding claim wherein the configurable domains comprise data for logical devices and real devices.

6. A system as claimed in any preceding claim comprising means for extending the data of at least one of the configurable domains by adding objects to the object oriented database.

7. A system as claimed in any of claims 4 to 6 comprising means for adding to the means for performing at least one specific operation on at least one of the objects in response to the user system management task.

8. A system as claimed in any of claims 3 to 7 wherein the user high level command means is changeable by the user for customising and/or adding to the user system management tasks to be performed.

9. A system as claimed in any of claims 2 to 8 comprising means for making changes to the user interface means.

10. A method for managing a plurality of system components of a data processing system, the method comprising:

representing data of the system components across a plurality of configurable domains in a plurality of objects of an object oriented database;

managing the objects consistently throughout the configurable domains by manipulating the objects through a structurally layered facility; and

independently extending each of the layers for managing an additional system component.

FIG. 1A

**SYSTEM MANAGEMENT CATEGORIES**

72 — **RESOURCE MANAGEMENT**
74 — **PROCESS/SUBSYSTEM MANAGEMENT**
76 — **SECURITY/USER MANAGEMENT**
78 — **PROBLEM MANAGEMENT**
79 — **NETWORK MANAGEMENT**

70

| RESOURCE MANAGEMENT (72) | PROCESS/SUBSYSTEM MANAGEMENT (74) | SECURITY/USER MANAGEMENT (76) | PROBLEM MANAGEMENT (78) | NETWORK MANAGEMENT (79) |
|---|---|---|---|---|
| INSTALLATION / VPD MGT 101 | INIT CONFIGURATION 106 | SECURITY MGT 109 | ERROR COLLECTION 113 | TCP/IP CONFIG 119 |
| DEVICE MGT 102 | SUBSYSTEM CONFIGURATION 107 | USER MGT 110 | ERROR DETECTION 114 | TCP/IP MGT (SNMP) 120 |
| DISK MGT 103 | OPERATIONAL CONTROL 108 | ACCOUNTING MGT 111 | ERROR REPORTING 115 | SNA CONFIG 121 |
| IPL MGT 104 | | AUTHENTICATION 112 | DIAGNOSTICS 116 | SNA MGT (PU-SSCP/CP-CP) 122 |
| SPOOLER MGT 105 | | | TRACE/DUMP 117 | |
| | | | ALERT MGT 118 | |

**FIG. 1B**

EP 0 398 643 A2

EP 0 398 643 A2

**ADD A VOLUME GROUP**

Vgname: _____
Size:
Node:
Logical volumes: ___ _ __

~ 11

USER
INTERFACE

20

HLC_MKVG - n {node} -v {vgname} -s {size}
-L {logical volumes}

HIGH LEVEL
COMMAND

30

31

```
802 ── if (odmopen (. . .cust device . . . node) < O
             {
               / * generate error * /
             }
812 ── if (odmget ( . . . vgname= "vgname" . . .
                                      . . . METHOD < O)
             {
               / * generate error * /
             }
804 ── if (odmclose ( . . .) < O)
             {
               / * generate error * /
             }
```

vg_add method_vgname
_Lv(s)
_size

40 ─

FIG. 2

EP 0 398 643 A2

FIG. 3A

D

OPEN THE APPROPRIATE OBJECT CLASSES /309

OPERATE ON THE APPROPRIATE OBJECTS (GET, ADD, DELETE, CHANGE) 310

311 INVOKE METHOD WITH OPERATIONS — Y — A

N

313 INVOKE A METHOD SEPARATELY — CLOSE OBJECT CLASSES 314 — RETURN ERRORS/ TEXT 315 — C

FILL IN METHOD STRUCTURE 317

INVOKE METHODS 319 — A

321 IF DONE — N ... Y

FIG. 3B

EP 0 398 643 A2

A

HIGH LEVEL COMMAND LAYER

OBJECT DATA MANAGER (ODM)

H → CALL ODM  INVOKE PASSING METHOD STRUCTURE — 401

CHECK OBJECT HANDLES AND OTHER PARAMETERS — 402

403 — IS PARAMETER OK ? — NO → RETURN FAILURE — 405

YES

CALL ODM SYSTEM ROUTINE — 406

OPEN TWO PAIRS OF READ/WRITE COMMUNICATION PIPES FOR STDOUT & STDERR — 407

408 — FORK THE REQUESTED CHILD

409 — IF PROCESS IS CHILD (METHOD) — N → F

Y

G

FIG. 4A

( F )

CLOSE THE WRITE PIPES — 412

SELECT ON THE READ PIPES FOR INPUT — 413

414 — IF INPUT

NO → BLOCK — 415

YES

READ APPROPRIATE PIPE, EITHER STDERR, STDOUT — 417

FILL IN APPROPRIATE STDERR OR STDOUT BUFFER — 418

419 — IF CHILD PROCESS DIES

NO

YES → CLEAN OUT PIPES — 421 → RETURN — 423 → ( H )

FIG. 4B

G

CLOSE CHILD PROCESS READ PIPES — 425

CLOSE CHILD PROCESS STDERR & STDOUT FILE DESCRIPTORS — 426

DUPLICATE THE WRITE PIPES ONTO STDOUT & STDERR — 427

CLOSE THE WRITE PIPES — 428

EXECUTE THE METHOD — 429

METHODS RETURNS OUTPUT ON STDOUT OR STDERR — 430

FIG. 4C

USERS: — 950

| USER NAME 951 | USER ID 952 | NAME DIRECTORY 953 | LINK TO PASSWORD 954 | LINK TO GROUPMAP 955 |
|---|---|---|---|---|
| Bob | 10 | /u/bob | | |

PASSWORD — 960

| USER NAME 951 | PASSWORD 961 | LAST DATE CHANGED 962 | . . . |
|---|---|---|---|
| Bob | DRSTG | 4/20/89 | |

GROUPMAP — 970

| USER NAME 951 | GROUP LINK 971 | . . . |
|---|---|---|
| Bob Bob | ADMIN SYSTEM | |

| GROUP NAME 981 | GROUP ID 982 | . . . |
|---|---|---|
| ADMIN SYSTEM | 101 10 | |

980

FIG. 5A

ADDING A USER

921 — NAME: _____931

922 — PASSWD: ___932

923 — HOME DIRECTORY: ___933

924 — GROUP(S): ___ 934 ___

925 — NODE: ___935

— 920

HLC    mkuser  -1 {username} - h {home directory}

930

-g {group list}  -n {node name}

934        935

931        933

| |
|---|
| VALIDATES THE PARAMETERS FOR SYNTACTICAL INTEGRITY — 936 |
| ISSUES ODMOPEN ON THE APPROPRIATE OBJECT CLASS — 937 |
| ISSUES ODMGET TO ENSURE USER DOESN'T ALREADY EXIST — 938 |
| INVOKES THE ADD_USER METHOD — 943 |
| CLOSES THE OBJECT CLASSES — 939 |

940

add_user method    -1 {user name}  -h {home directory}

-g {groups}  -n {node name}

934        935

931        933

| |
|---|
| VALIDATES SEMANTIC INTEGRITY — 941 |
| ADDS THE USER AND UPDATES THE APPROPRIATE GROUP OBJECTS BY CALLING LOW LEVEL COMMANDS — 942 |

FIG. 5B

CUSTOMIZED DEVICES ⟋ 601

| 612 DNAME | 613 DD INSTANCE | 614 DD TYPE | ••• | 621 DEFINE METHOD | 622 CONFIG METHOD | 623 UNDEFINE | 624 UNCONFIG | 625 LINK | ••• | 630 LINK | 640 LINK |
|---|---|---|---|---|---|---|---|---|---|---|---|
| HDISKO 602 | HD | HD | 627 | /etc/sysmgt/ HDISK_dfmeth | /etc/sysmgt/ HDISK_cfmeth | /etc/sysgmt/ HDISK_UDFMETH | /etc/sysgmt/ HDISK_UCFMETH | | | | |
| LPO 603 | LP | LP | | /etc/sysgmt/ LP_dfmeth | /etc/sysgmt/ LP_cfmeth | 628 ⋮ | ⋮ | | | | |
| TTYO 604 | TTY | TTY | | ⋮ | ⋮ | ⋮ | ⋮ | | | | |
| TTY1 605 | TTY | TTY | | /etc/sysgmt/ TTY_dfmeth | /etc/sysgmt/ TTY_cfmeth | ⋮ | ⋮ | | | | |
| SAO 606 | | | | ⋮ | ⋮ | ⋮ | ⋮ | | | | |
| VG1 607 | VGIO | LVG | | ⋮ | ⋮ | ⋮ | ⋮ | | | | |
| VG2 608 | VGI1 | LVG | | ⋮ | ⋮ | ⋮ | ⋮ | | | | |

CUSTOMIZED ATTRIBUTE ⟋ 631

| KEY | ATTNAME | QUALIFIER | ATTTYPE | ATTVALUE |
|---|---|---|---|---|
| TTY | BAUD | DEFAULT | INT | 9600 |
| TTY | PARITY | DEFAULT | CHAR | EVEN |

FIG. 6

EP 0 398 643 A2

```
                    struct method_description {
                                                        ⌐ 702
              701 ⌐                          char method_name [MAX_DESCRIP_NA'

                          703 ⌒     char optional_params [MAX_PARM_LIS'

                          704 ⌒     char std_out [MAX_MOUTPUT_SIZE] ;

                          705 ⌒     char std_err [MAX_MOUTPUT_SIZE] ;

        FIG. 7      706 ⌒     int return_value ;

                                    } ;
```

odmchange () ⌐ 818

```
#include <odm.h>
                     ⌐832        ⌐843      ⌐838    ⌐835      ⌐836      ⌐837
int odmchange ( objecthandle, objcontent, ucrit, informat, user_flags, methods_to_do )
long  objecthandle;
struct descrip_content * objcontent;
struct objsrch  *ucrit;
int informat;
int user_flags;
struct method_descriptor * methods_to_do;
```

FIG. 8I

EP 0 398 643 A2

odmopen () ⌣— 802

```
    #include <odm.h>       831              832

    int odmopen ( objectdescp,  objecthandle )
    struct class_info * objectdescp;
    long * objecthandle;
```

FIG. 8A

odmclose () ⌣— 804

```
    #include <odm.h>        832           833

    int odmclose ( objecthandle,  force )
    long  objecthandle;
    int forct;
```

FIG. 8B

odminvoke () ⌐⌣—806

```
    #include <odm.h>        832      838        837

    int odminvoke ( objecthandle,  ucrit,  methods_to_do )
    long  objecthandle;
    struct objsrch * ucrit;
    struct method_description * methods_to_do;
```

FIG. 8C

odmadd () ⌣— 808

```
#include <odm.h>              832        834          835      836          837

int odmadd ( objecthandle,  new_values,  informat,  user_flags, methods_to_do )
long objecthandle;
struct descrip_content * new_values;
int informat;                    /* STANZA, COLON, ODM, IBM_INTERNAL_RAW * /
int user_flags;                  /* EXPAND, NOEXPAND, DO_TO_INHERIT, etc */
struct method_description * methods_to_do;
```

<div align="right">FIG. 8D</div>

EP 0 398 643 A2

odmget () ⌣⌣ 812

```
#include <odm.h>              832      838        836      839      837                840

int odmget ( objecthandle. ucrit, user_flags, outformat,  methods_to_do, descriptr )
long  * objecthandle;
struct objsrch * ucrit;
int user_flags;
int outformat;
struct method_description * methods_to_do;
struct descrip_content * * descriptr;
```

<div align="right">FIG. 8F</div>

odmdelete () ⌐ 810

```
    #include <odm.h>
                        832        838     836              837
    int odmdelete ( objecthandle,  ucrit,  user_flags,  methods_to_do )
    long  objecthandle;
    struct objsrch  *ucrit;
    int user_flags;
    struct method_description * methods_to_do;
```

FIG. 8E

odmcreate () ⌐ 814

```
    #include <odm.h> 841        842

    int odmcreate ( classattr, descripattr )
    struct class_info * classattr;
    struct descrip_info * descripattr;
```

FIG. 8G

odmdrop () ⌐ 816

```
    #include <odm.h> 841   833

    int odmdrop ( classattr, force )
    struct class_info * classattr;
    int force;
```

FIG. 8H

odmterm () ⌐ 826

```
    #include <odm.h>

    int odmterm ( )
```

FIG. 8J